# EUROPEAN PATENT APPLICATION

(11) **EP 4 672 053 A1**
(43) Date of publication of application: **31.12.2025**
(21) Application number: 25184021.1
(22) Date of filing: 19.06.2025
(51) Int. Cl.: G06F 21/55, G06N 20/00, H04L 9/40

(54) **AI-BASED ENTITY MALICIOUSNESS ANALYSIS USING EMBEDDING AND SAMPLING**

(30) Priority: 26.06.2024 US 202418755032
(71) Applicant: Microsoft Technology Licensing, LLC, Redmond, WA 98052 (US)
(72) Inventor: AHMAD, Naveed Azeemi, Redmond, 98052 (US); GREENWALD, Lloyd Geoffrey, Redmond, 98052 (US); BULUT, Muhammed Fatih, Redmond, 98052 (US); LIU, Yingqi, Redmond, 98052 (US); TAMERSOY, Acar, Redmond, 98052 (US)
(74) Representative: CMS Cameron McKenna Nabarro Olswang LLP

(57) **Abstract**

Techniques are described herein that are capable of performing AI-based entity maliciousness analysis using embedding and sampling. A representative sample of data associated with an entity is selected by comparing embeddings that represent the data. A potentially anomalous data point is identified in at least a portion of the data based on a proximity of a node, which corresponds to the potentially anomalous data point, in a tree to a root node of the tree. A statistically anomalous data point is identified in representative sample data points, which define the representative sample, as a result of the statistically anomalous data point indicating an unexpected occurrence of an event. An AI model is triggered to determine whether the entity exhibits malicious behavior by providing an AI prompt, including the representative sample and a description of the potentially anomalous data point and the statistically anomalous data point, to the AI model.

## Description

### BACKGROUND

Cybersecurity includes measures that are taken to protect a system (e.g., a computer or a network) from digital attacks. One common challenge that such measures seek to address is detection of malicious activities with regard to the system. Conventional techniques for detecting malicious activities often rely on heuristics, statistical anomaly detection, or supervised machine learning (ML). However, the conventional techniques have their limitations. For instance, the conventional techniques primarily operate based on existing knowledge (i.e., historical data) and known attack patterns. Consequently, the conventional techniques typically struggle to identify novel attacks. A novel attack is a digital attack that deviates from familiar (i.e., known) tactics, techniques, and procedures (TTPs) that are used by threat actors.

The emergence of large language models (LLMs) has introduced a fresh perspective to addressing the detection of malicious activities. LLMs, such as GPT-4, are capable of reasoning over the data that they encounter. However, the LLMs have token limits, which limit the amount of data that can be included in an AI prompt that is analyzed by the LLMs. The amount of data that is to be processed by LLMs to detect malicious activity often exceeds the token limits of the LLMs. Accordingly, all of the data typically cannot be included in a single AI prompt for analysis.

### SUMMARY

Artificial intelligence (AI) is intelligence of a machine (e.g., a computing system) and/or code (e.g., software and/or firmware), as opposed to intelligence of a living creature (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

It may be desirable to use one or more AI models to detect malicious behavior without exceeding token limits of the AI models. For instance, a corpus of data (e.g., a corpus of logs) that is relevant to detecting the malicious behavior may be sampled to provide sampled data that is deemed to adequately represent the corpus of the data. The sampled data may be selected by comparing embeddings that represent the data. Embeddings of the sampled data may be compared to identify potentially or statistically anomalous data. Including the sampled data and a description of the potentially or statistically anomalous data in an AI prompt that is provided to an AI model for processing may enable the AI model to determine whether malicious behavior is exhibited without the size of the AI prompt exceeding the token limit of the AI model.

Various approaches are described herein for, among other things, performing AI-based entity maliciousness analysis using embedding and sampling. In an example approach, identified logs are selected from a plurality of logs, which are associated with an entity, as a result of embeddings, which represent the identified logs, satisfying a representation criterion. Potentially anomalous logs are identified in at least a portion of the plurality of logs as a result of differences between embeddings of the potentially anomalous logs and a reference embedding being greater than differences between embeddings of other logs in at least the portion of the plurality of logs and the reference embedding. The reference embedding corresponds to at least the portion of the plurality of logs. Statistically anomalous logs are identified in the identified logs as a result of events indicated by embeddings of the statistically anomalous logs occurring more than an expected number of times during a period of time. An artificial intelligence (AI) model is triggered to determine whether the entity exhibits malicious behavior by providing an AI prompt as an input to the AI model. The AI prompt includes the identified logs, a description of the potentially anomalous logs, and a description of the statistically anomalous logs. The AI prompt inquires whether the entity exhibits malicious behavior.

In another example approach, a representative sample of a plurality of logs, which are associated with an entity, is selected by comparing a plurality of embeddings that represent the plurality of logs. The representative sample includes fewer than all of the plurality of logs. A potentially anomalous log is identified in at least a portion of the plurality of logs as a result of the potentially anomalous log corresponding to a first node of a tree that is closer than second nodes of the tree to a root node of the tree. The second nodes correspond to other logs in at least the portion of the plurality of logs. A statistically anomalous log is identified in representative sample logs, which define the representative sample, as a result of the statistically anomalous log indicating an event that occurs a number of times that exceeds a number threshold or that occurs during a time period in which a probability of the event occurring is less than a probability threshold. An artificial intelligence (AI) model is triggered to generate a report, which indicates whether the entity exhibits malicious behavior, by providing an AI prompt together with contextual information as inputs to the AI model. The AI prompt inquires whether the entity exhibits malicious behavior. The contextual information includes the representative sample of the plurality of logs, a description of the potentially anomalous log, and a description of the statistically anomalous log. The contextual information includes context regarding the AI prompt.

Techniques are described herein that are capable of performing AI-based entity maliciousness analysis using embedding and sampling. A representative sample of data associated with an entity is selected by comparing embeddings that represent the data. A potentially anomalous data point is identified in at least a portion of the data based on a proximity of a node, which corresponds to the potentially anomalous data point, in a tree to a root node of the tree. A statistically anomalous data point is identified in representative sample data points, which define the representative sample, as a result of the statistically anomalous data point indicating an unexpected occurrence of an event. An AI model is triggered to determine whether the entity exhibits malicious behavior by providing an AI prompt, including the representative sample and a description of the potentially anomalous data point and the statistically anomalous data point, to the AI model.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example sampling and embedding AI system in accordance with an embodiment.
FIGS. 2 and 5 depict flowcharts of example methods for performing an AI-based entity maliciousness analysis using embedding and sampling in accordance with embodiments.
FIG. 3 depicts a flowchart of an example method for selecting identified logs from a plurality of logs in accordance with an embodiment.
FIG. 4 is a block diagram of an example computing system in accordance with an embodiment.
FIG. 6 depicts a flowchart of an example method for selecting a representative sample of a plurality of logs in accordance with an embodiment.
FIG. 7 is a block diagram of another example computing system in accordance with an embodiment.
FIG. 8 is a system diagram of an example mobile device in accordance with an embodiment.
FIG. 9 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

Artificial intelligence (AI) is intelligence of a machine (e.g., a computing system) and/or code (e.g., software and/or firmware), as opposed to intelligence of a living creature (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

It may be desirable to use one or more AI models to detect malicious behavior without exceeding token limits of the AI models. For instance, a corpus of data (e.g., a corpus of logs) that is relevant to detecting the malicious behavior may be sampled to provide sampled data that is deemed to adequately represent the corpus of the data. The sampled data may be selected by comparing embeddings that represent the data. Embeddings of the sampled data may be compared to identify potentially or statistically anomalous data. Including the sampled data and a description of the potentially or statistically anomalous data in an AI prompt that is provided to an AI model for processing may enable the AI model to determine whether malicious behavior is exhibited without the size of the AI prompt exceeding the token limit of the AI model.

Example embodiments described herein are capable of performing AI-based entity maliciousness analysis using embedding and sampling. In an example approach, identified logs are selected from a plurality of logs, which are associated with an entity, as a result of embeddings, which represent the identified logs, satisfying a representation criterion. Potentially anomalous logs are identified in at least a portion of the plurality of logs as a result of differences between embeddings of the potentially anomalous logs and a reference embedding being greater than differences between embeddings of other logs in at least the portion of the plurality of logs and the reference embedding. The reference embedding corresponds to at least the portion of the plurality of logs. Statistically anomalous logs are identified in the identified logs as a result of events indicated by embeddings of the statistically anomalous logs occurring more than an expected number of times during a period of time. An artificial intelligence (AI) model is triggered to determine whether the entity exhibits malicious behavior by providing an AI prompt as an input to the AI model. The AI prompt includes the identified logs, a description of the potentially anomalous logs, and a description of the statistically anomalous logs. The AI prompt inquires whether the entity exhibits malicious behavior.

In another example approach, a representative sample of a plurality of logs, which are associated with an entity, is selected by comparing a plurality of embeddings that represent the plurality of logs. The representative sample includes fewer than all of the plurality of logs. A potentially anomalous log is identified in at least a portion of the plurality of logs as a result of the potentially anomalous log corresponding to a first node of a tree that is closer than second nodes of the tree to a root node of the tree (e.g., based on a selected feature, such as an embedded representation of logs). The second nodes correspond to other logs in at least the portion of the plurality of logs. A statistically anomalous log is identified in representative sample logs, which define the representative sample, as a result of the statistically anomalous log indicating an event that occurs a number of times that exceeds a number threshold or that occurs during a time period in which a probability of the event occurring is less than a probability threshold. An artificial intelligence (AI) model is triggered to generate a report, which indicates whether the entity exhibits malicious behavior, by providing an AI prompt together with contextual information as inputs to the AI model. The AI prompt inquires whether the entity exhibits malicious behavior. The contextual information includes the representative sample of the plurality of logs, a description of the potentially anomalous log, and a description of the statistically anomalous log. The contextual information includes context regarding the AI prompt.

Example techniques described herein have a variety of benefits as compared to conventional techniques for detecting malicious behavior. For instance, the example techniques are capable of reducing an amount of data that is to be analyzed by an AI model for detecting malicious behavior so that the amount is less than a token limit of the AI model. The amount of the data may be reduced without compromising accuracy, precision, and/or reliability of a determination by the AI model whether the data exhibits malicious behavior. The example techniques are capable of using an embedding model to generate embeddings that represent the data and to compare the embeddings to generate a representative sample of the data. The example techniques are capable of doing so by taking semantic meaning of logs into account in addition to syntactic similarity/dissimilarity of the logs. By comparing embeddings of the data that is included in the representative sample, the example techniques may identify potentially or statistically anomalous data that are to be flagged for consideration by the AI model. For example, the embedding model may generate an AI prompt that includes the representative sample of the data and a description of the potentially or statistically anomalous data. In accordance with this example, the embedding model may trigger the AI model to determine whether the data exhibits malicious behavior by providing the AI prompt as an input to the AI model.

The example techniques may reduce an amount of time and/or resources (e.g., processor cycles, memory, network bandwidth) that is consumed to determine whether data exhibits malicious behavior. For instance, by presenting a representative sample of the data (rather than an entirety of the data) to an AI model, the number of operations that are performed to determine whether the data exhibits malicious behavior may be reduced. By providing the representative sample to the AI model, truncation of the data and/or manual analysis of the data may be avoided. Accordingly, using the representative sample may increase accuracy, precision, and/or reliability of a determination made by the AI model with regard to whether the data exhibits malicious behavior. By using embeddings to identify potentially or statistically anomalous data and providing a description of the potentially or statistically anomalous data to the AI model together with the representative sample, the example techniques may further increase accuracy, precision, and/or reliability of the determination made by the AI model. By reducing the amount of time and/or resources that is consumed by a computing system to determine whether data exhibits malicious behavior, the efficiency of the computing system may be increased.

By reducing the amount of time that is consumed to determine whether data exhibits malicious behavior, the example techniques may increase a user experience and/or efficiency of an information technology (IT) professional who manages security of a system that stores or accesses the data. The example techniques may increase a user experience and/or efficiency of an end user who accesses the data, for example, by increasing security of the data. The user experience of the IT professional and/or the end user may be increased in other ways, for example, through a more accurate, precise, and/or reliable determination as to whether the data exhibits malicious behavior.

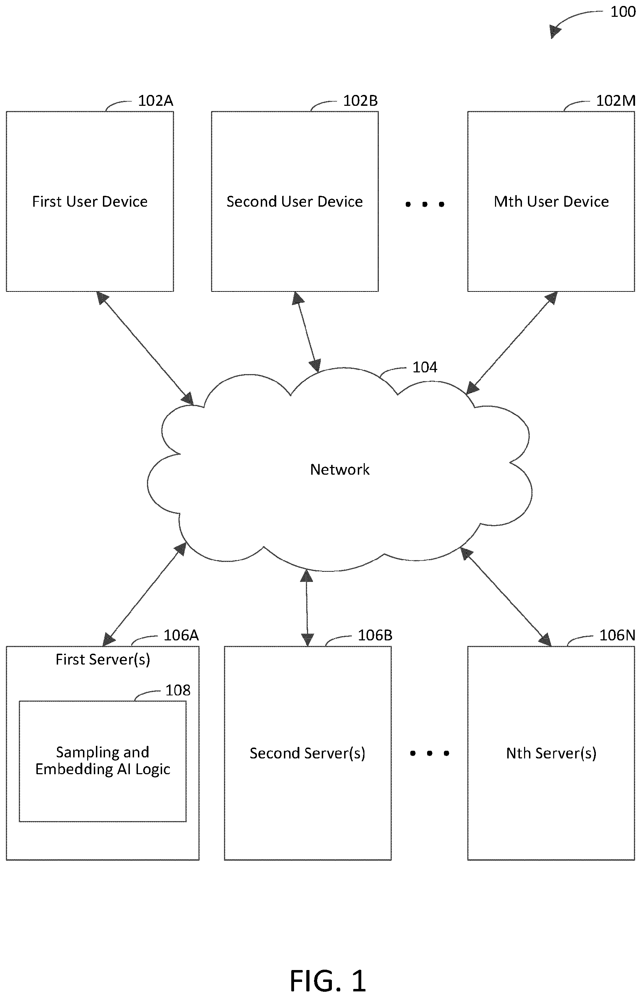

FIG. 1 is a block diagram of an example sampling and embedding AI system 100 in accordance with an embodiment. Generally speaking, the sampling and embedding AI system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the sampling and embedding AI system 100 performs AI-based entity maliciousness analysis using embeddings and sampling. Detail regarding techniques for performing AI-based entity maliciousness analysis using embeddings and sampling is provided in the following discussion.

As shown in FIG. 1, the sampling and embedding AI system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the sampling and embedding AI system 100.

One example type of computer program that may be executed by one or more of the servers 106A-106N is a computer security program. A computer security program is a computer program that provides security with regard to information and/or communications associated with a computing system. For instance, the information associated with the computing system may include information stored on the computing system and/or information accessed (e.g., read) by the computing system. The communications associated with the computing system may include communications received by the computing system and/or communications provided (e.g., transmitted) by the computing system. An example of a communication is an electronic message. Examples of a computer security program include Bitdefender^{®} security program, developed and distributed by Bitdefender IPR Management Ltd.; Norton^{®} security program, developed and distributed by Gen Digital Inc.; Avast^{®} security program, developed and distributed by Avast Software S.R.O.; McAfee^{®} security program, developed and distributed by McAfee, LLC; and Microsoft Defender^{®} security program, developed and distributed by Microsoft Corporation. It will be recognized that the example techniques described herein may be implemented using a computer security program. For instance, a software product (e.g., a subscription service, a non-subscription service, or a combination thereof) may include the computer security program, and the software product may be configured to perform the example techniques, though the scope of the example embodiments is not limited in this respect.

The computer security program may be a cloud native application protection platform (CNAPP). A CNAPP is an all-in-one platform that unifies security and compliance capabilities to prevent, detect, and respond to cloud security threats. A CNAPP integrates multiple cloud security solutions, which traditionally have been siloed, into a common (e.g., single) user interface. The cloud security solutions may include cloud security posture management (CSPM), multipipeline development and operations (DevOps) security, a cloud workload protection platform (CWPP), cloud infrastructure entitlement management (CIEM), and cloud service network security (CSNS). CSPM provides a connected, prioritized view of potential vulnerabilities and misconfigurations across multi-cloud and hybrid environments. The CSPM continuously assesses overall security posture of a system and provides automated alerts and recommendations about critical issues that could expose the system to data breaches. The CSPM may include automated compliance management and remediation tools to identify and remedy compliance deficiencies. Multipipeline DevOps security provides a central console that enables management of DevOps security across multiple (e.g., all) pipelines. For instance, the multipipeline DevOps security may be used to reduce cloud misconfigurations and to scan new code to keep vulnerabilities therein from reaching a production environment. The multipipeline DevOps security may include infrastructure-as-code scanning tools that analyze configuration files from the earliest stages of development to confirm that new configuration files are compliant with security policies. A CWPP provides real-time detection and response to threats based on up-to-date information regarding multi-cloud workloads (e.g., virtual machines, containers, Kubernetes, databases, storage accounts, network layers, and app services). The CWPP may enable a quick investigation into threats and reduce the attack surface of a system. CIEM centralizes permissions management across a cloud and hybrid footprint, which inhibits (e.g., prevents) accidental or malicious misuse of permissions. CSNS complements the CWPP by protecting cloud infrastructure in real time. The CSNS may include any of a variety of security tools, including but not limited to distributed denial-of-service protection, web application firewalls, transport layer security examination, and load balancing.

A computer security program may be incorporated into a cloud computing program (a.k.a. a cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include but are not limited to a Google Cloud^{®} program developed and distributed by Google Inc.; an Oracle Cloud^{®} program developed and distributed by Oracle Corporation; an Amazon Web Services^{®} program developed and distributed by Amazon.com, Inc.; a Salesforce^{®} program developed and distributed by Salesforce.com, Inc.; an AppSource^{®} program developed and distributed by Microsoft Corporation; an Azure^{®} program developed and distributed by Microsoft Corporation; a GoDaddy^{®} program developed and distributed by GoDaddy.com LLC; and a Rackspace^{®} program developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include sampling and embedding AI logic 108 for illustrative purposes. The sampling and embedding AI logic 108 is configured to perform AI-based entity maliciousness analysis using embeddings and sampling. In an example implementation, the sampling and embedding AI logic 108 selects identified logs from a plurality of logs, which are associated with an entity, as a result of embeddings, which represent the identified logs, satisfying a representation criterion. The sampling and embedding AI logic 108 identifies potentially anomalous logs in at least a portion of the plurality of logs as a result of differences between embeddings of the potentially anomalous logs and a reference embedding that corresponds to at least the portion of the plurality of logs being greater than differences between embeddings of other logs in at least the portion of the plurality of logs and the reference embedding. The sampling and embedding AI logic 108 identifies statistically anomalous logs in the identified logs as a result of events indicated by embeddings of the statistically anomalous logs occurring more than an expected number of times during a period of time. The sampling and embedding AI logic 108 triggers an AI model to determine whether the entity exhibits malicious behavior by providing an AI prompt as an input to the AI model. The AI prompt includes the identified logs, a description of the potentially anomalous logs, and a description of the statistically anomalous logs. The AI prompt inquires whether the entity exhibits malicious behavior.

In another example implementation, the sampling and embedding AI logic 108 selects a representative sample of a plurality of logs, which are associated with an entity, by comparing a plurality of embeddings that represent the plurality of logs. The representative sample includes fewer than all of the plurality of logs. The sampling and embedding AI logic 108 identifies a potentially anomalous log in at least a portion of the plurality of logs as a result of the potentially anomalous log corresponding to a first node of a tree that is closer than second nodes of the tree to a root node of the tree. The second nodes correspond to other logs in at least the portion of the plurality of logs. The sampling and embedding AI logic 108 identifies a statistically anomalous log in representative sample logs, which define the representative sample, as a result of the statistically anomalous log indicating an event that occurs a number of times that exceeds a number threshold or that occurs during a time period in which a probability of the event occurring is less than a probability threshold. The sampling and embedding AI logic 108 triggers an AI model to generate a report, which indicates whether the entity exhibits malicious behavior, by providing an AI prompt together with contextual information as inputs to the AI model. The AI prompt inquires whether the entity exhibits malicious behavior. The contextual information includes the representative sample of the plurality of logs, a description of the potentially anomalous log, and a description of the statistically anomalous log. The contextual information includes context regarding the AI prompt.

The sampling and embedding AI logic 108 may be implemented in various ways to perform AI-based entity maliciousness analysis using embeddings and sampling, including being implemented in hardware, software, firmware, or any combination thereof. For example, the sampling and embedding AI logic 108 may be implemented as computer program code configured to be executed in one or more processors. In another example, at least a portion of the sampling and embedding AI logic 108 may be implemented as hardware logic/electrical circuitry. For instance, at least a portion of the sampling and embedding AI logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the sampling and embedding AI logic 108 may be (or may be included in) a computer security program and/or a cloud computing program, though the scope of the example embodiments is not limited in this respect.

The sampling and embedding AI logic 108 is shown to be incorporated in the first server(s) 106A for illustrative purposes and is not intended to be limiting. It will be recognized that the sampling and embedding AI logic 108 (or any portion(s) thereof) may be incorporated in any one or more of the servers 106A-106N, any one or more of the user devices 102A-102M, or any combination thereof. For example, client-side aspects of the sampling and embedding AI logic 108 may be incorporated in one or more of the user devices 102A-102M, and server-side aspects of sampling and embedding AI logic 108 may be incorporated in one or more of the servers 106A-106N.

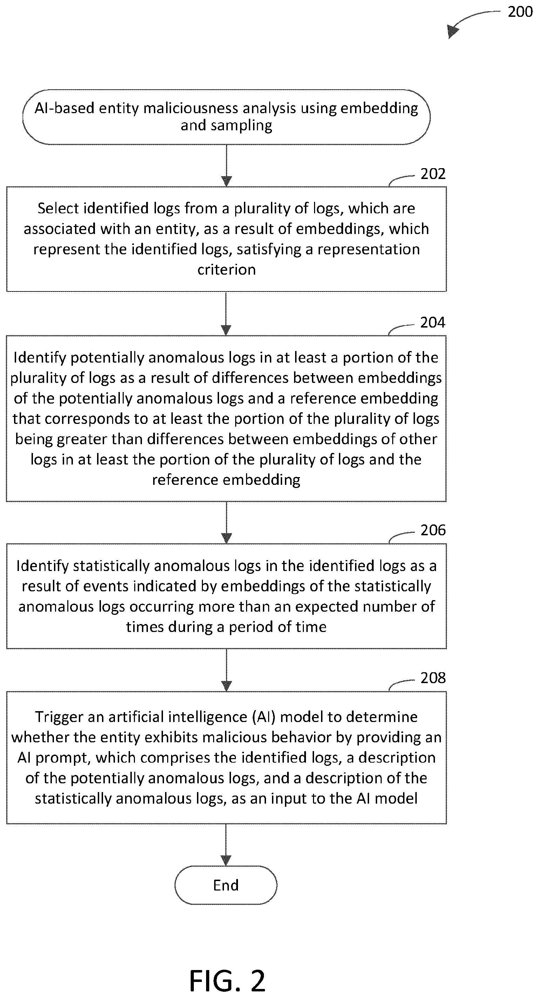

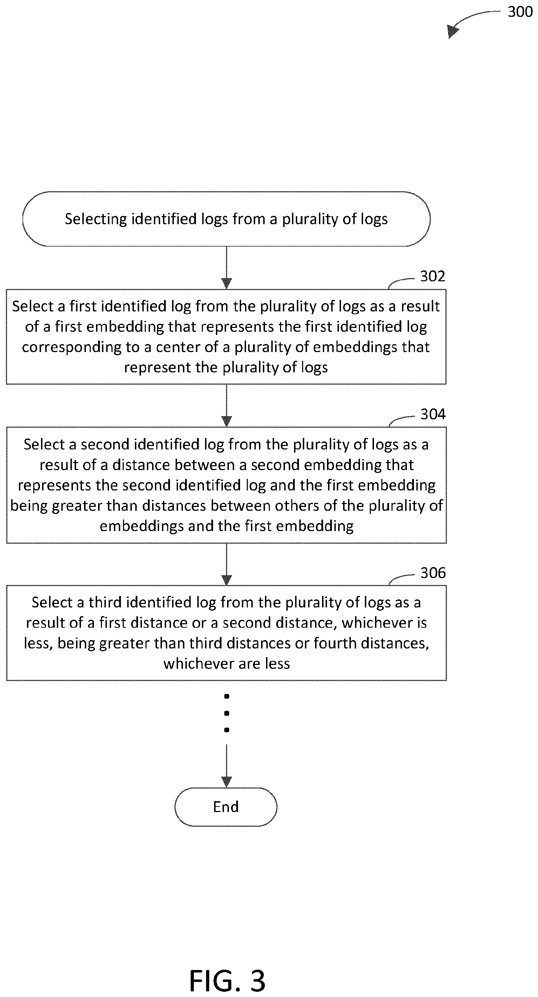

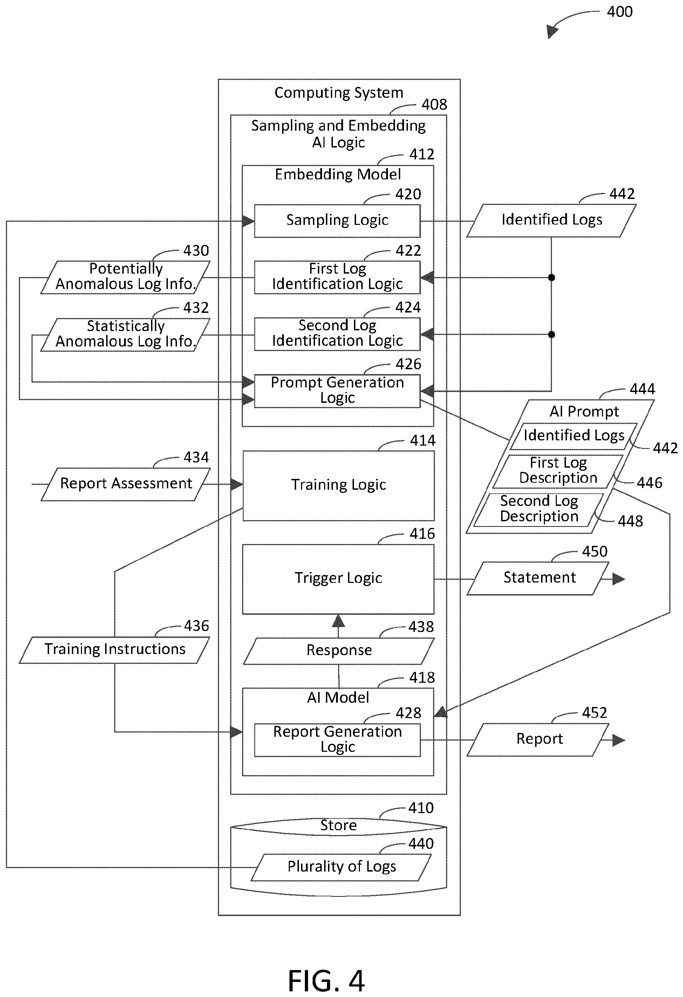

FIG. 2 depicts a flowchart 200 of an example method for performing an AI-based entity maliciousness analysis using embedding and sampling in accordance with an embodiment. FIG. 3 depicts a flowchart 300 of an example method for selecting identified logs from a plurality of logs in accordance with an embodiment. Flowcharts 200 and 300 may be performed by the first server(s) 106A shown in FIG. 1, for example. For illustrative purposes, flowcharts 200 and 300 are described with respect to a computing system 400 shown in FIG. 4, which is an example implementation of the first server(s) 106A. As shown in FIG. 4, the computing system 400 includes sampling and embedding AI logic 408 and a store 410. The sampling and embedding AI logic 408 includes an embedding model 412, training logic 414, trigger logic 416, and an AI model 418. The embedding model 412 includes sampling logic 420, first log identification logic 422, second log identification logic 424, and prompt generation logic 426. The AI model 418 includes report generation logic 428. The store 410 may be any suitable type of store. One type of store is a database. For instance, the store 410 may be a relational database, an entity-relationship database, an object database, an object relational database, an extensible markup language (XML) database, etc. The store 410 is shown to store a plurality of logs 440 for non-limiting, illustrative purposes. Further structural and operational embodiments will be apparent to persons skilled in the relevant art(s) based on the discussion regarding flowcharts 200 and 300.

As shown in FIG. 2, the method of flowchart 200 begins at step 202. In step 202, identified logs are selected from a plurality of logs, which are associated with an entity, as a result of embeddings (a.k.a. tokens), which represent the identified logs, satisfying a representation criterion. In an aspect, step 202 is performed in response to a triggering event related to the entity. The triggering event may be manually initiated or automatically initiated. The triggering event may be initiated by a user (e.g., a human) or by a computing system. In an aspect, the plurality of logs memorialize events that occur with regard to the entity during a specified period of time. Examples of an entity include but are not limited to a user, an application, a computing system, and an Internet Protocol (IP) address. An embedding is a numerical representation of data (e.g., a log or a portion thereof). For instance, the embedding may be generated by converting the data (e.g., text) into a vector (e.g., an array of numbers). In an aspect, the embedding represents the meaning and the context of the data. It will be recognized that the representation criterion may include one or more criteria. In an aspect, the representation criterion requires that the identified logs pertain to security of the entity.

In an example implementation, the sampling logic 420 selects identified logs 442 from the plurality of logs 440, which are associated with the entity, as a result of embeddings, which represent the identified logs 442, satisfying the representation criterion. In an aspect, the sampling logic 420 generates a plurality of embeddings to represent the plurality of logs. The plurality of embeddings may serve as generic representations of the plurality of logs without requiring explicit feature engineering. For instance, each embedding may represent a respective word or combination of words in a corresponding log. For example, each embedding may represent a log line (e.g., a row in a table) in a log. In accordance with this example, a log that includes N log lines is represented by N embeddings, where N is a positive integer. In further accordance with this example, first embeddings may be created to represent respective portions (e.g., words) in a log line, and the first embeddings may be combined to provide a second embedding that represents an entirety of the log line. For instance, the first embeddings may be combined by calculating a mean or a median of the first embeddings to provide the second embedding. In another example, each embedding may represent an entirety of a respective log. In accordance with this aspect, the sampling logic 420 compares the plurality of embeddings to determine which of the identified logs 442 are to be selected at step 202. In an aspect, the sampling logic 420 uses contrastive learning to select the identified logs 442 from the plurality of logs 440. Contrastive learning is a machine learning technique in which a model is trained to distinguish between similar and dissimilar data points. For instance, the model may be trained to maximize similarity of representations of similar data points and minimize similarity of representations of dissimilar data points. A data point is an element (e.g., an identifiable element) in a dataset. Examples of an element include but are not limited to a word, a combination of words, a log line, and a log.

At step 204, potentially anomalous logs are identified in at least a portion of the plurality of logs (e.g., in the identified logs or in an entirety of the plurality of logs) as a result of differences between embeddings of the potentially anomalous logs and a reference embedding that corresponds to at least the portion of the plurality of logs being greater than differences between embeddings of other logs in at least the portion of the plurality of logs and the reference embedding. In an example implementation, the first log identification logic 422 identifies the potentially anomalous logs in at least a portion of the plurality of logs 440 (e.g., in the identified logs 442 or in an entirety of the plurality of logs 440) as a result of a difference between an embedding of each potentially anomalous log and a reference embedding that corresponds to at least the portion of the plurality of logs 440 being greater than a difference between an embedding of each log in at least the portion of the plurality of logs 440 that is not included in the potentially anomalous logs and the reference embedding. The first log identification logic 422 generates potentially anomalous log information 430 to describe the potentially anomalous logs.

In an example embodiment, the potentially anomalous logs are identified at step 204 by determining a plurality of distances between the reference embedding and a plurality of respective embeddings of the plurality of respective logs. In an aspect, the reference embedding corresponds to a center (e.g., average or median) of the plurality of embeddings. In accordance with this embodiment, the potentially anomalous logs are identified at step 204 based on (e.g., based at least on) their embeddings being respective distances from the reference embedding that are greater than the distances of the embeddings of the other logs in at least the portion of the plurality of logs from the reference embedding. For example, the embedding of each potentially anomalous log may be farther than the embedding of each other log in at least the portion of the plurality of logs (i.e., each log in at least the portion of the plurality of logs that is not a potentially anomalous log) from the reference embedding. In an aspect, the potentially anomalous logs are identified as N logs in at least the portion of the plurality of logs that are farthest from the reference log, where N is a positive integer. In another aspect, the potentially anomalous logs are identified as logs in at least the portion of the plurality of logs having respective embeddings that are at least a threshold distance from the reference embedding.

In another example embodiment, the potentially anomalous logs are identified at step 204 using an isolation forest technique. An isolation forest technique is a technique that detects anomalies using a binary tree. In an aspect, the plurality of logs is represented by a plurality of respective nodes in a tree. In accordance with this aspect, logs having nodes that are closest to a root node of the tree are identified as the potentially anomalous logs. For example, the nodes that are closest to the root node may be determined based on the nodes having a path length to the root node that is less than or equal to a specified path length. The path length may be based on (e.g., correspond to) a number of branches (a.k.a. splits) that are encountered between the node and the root node.

In yet another example embodiment, the potentially anomalous logs are identified at step 204 using an isolation-based neural network embeddings (INNE) technique.

At step 206, statistically anomalous logs are identified in the identified logs as a result of events indicated by embeddings of the statistically anomalous logs occurring more than an expected (e.g., threshold) number of times during a period of time. In an aspect, the statistically anomalous logs are identified by performing a statistical analysis on the identified logs. In accordance with this aspect, the statistical analysis includes making a determination that the events indicated by the embeddings of the statistically anomalous logs occur more than the expected number of times during the period of time. In an example implementation, the second log identification logic 424 identifies the statistically anomalous logs in the identified logs 442 as a result of events indicated by embeddings of the statistically anomalous logs 432 occurring more than the expected number of times during the period of time. The second log identification logic 424 generates statistically anomalous log information 432 to describe the statistically anomalous logs.

In an example embodiment, the statistically anomalous logs are identified at step 206 using a frequency analysis technique. A frequency analysis technique is a technique that determines a frequency with which a data point occurs in a dataset. For example, the frequency analysis technique may be used to determine that a log indicating that a person accesses a resource at an unusual time (e.g., 2:00am) is a statistically anomalous log. In another example, the frequency analysis technique may be used to determine that a log indicating that a resource that historically has been accessed only from the United States was accessed once from the United Kingdom is a statistically anomalous log.

In another example embodiment, the statistically anomalous logs are identified at step 206 using a p-value technique. A p-value technique is a technique that determines a probability value (a.k.a. a p-value) indicating a likelihood that observed data could have occurred under the null hypothesis. The null hypothesis is that no relationship exists between variables of interest or no difference exists among groups. A relatively low p-value indicates that the observed data is inconsistent with the null hypothesis, which may indicate that another hypothesis may be better supported by the observed data. A relatively high p-value indicates that the observed data is consistent with the null hypothesis.

At step 208, an AI model is triggered to determine whether the entity exhibits malicious behavior by providing an AI prompt as an input to the AI model. The AI prompt includes the identified logs, a description of the potentially anomalous logs, and a description of the statistically anomalous logs. The AI prompt inquires whether the entity exhibits malicious behavior. For instance, the AI prompt may request that the AI model determine whether the entity exhibits the malicious behavior. In an example implementation, the prompt generation logic 426 triggers the AI model 418 to determine whether the entity exhibits malicious behavior by providing an AI prompt 444 as an input to the AI model 418. The AI prompt 444 includes the identified logs 442, a first log description 446, and a second log description 448. The first log description 446 is a description of the potentially anomalous logs. In an aspect, the prompt generation logic 426 generates the first log description 446 based on (e.g., based at least in part on) the potentially anomalous log information 430. The second log description 448 is a description of the statistically anomalous logs. In an aspect, the prompt generation logic 426 generates the second log description 448 based on the statistically anomalous log information 432. The AI prompt 444 inquires whether the entity exhibits malicious behavior. For instance, the AI prompt 444 may request that the AI model 418 determine whether the entity exhibits malicious behavior.

In an example embodiment, the prompt generation logic 426 causes (e.g., triggers) the AI model 418 to analyze (e.g., develop and/or refine an understanding of) the AI prompt 444 (including the identified logs 442, the first log description 446, and the second log description 448), relationships between any of the foregoing, and confidences in those relationships. For example, the prompt generation logic 426 may cause the AI model 418 to compare attributes of the AI prompt 444 (including the identified logs 442, the first log description 446, and the second log description 448), contextual information (which may include sample AI prompt(s), sample identified logs, sample first log description(s), and sample second log description(s)) using artificial intelligence to determine whether the entity exhibits malicious behavior.

In some example embodiments, the AI model 418 includes a neural network that uses the artificial intelligence to determine (e.g., predict) relationships between the AI prompt 444 (including the identified logs 442, the first log description 446, and the second log description 448), the contextual information, and confidences in the relationships. The neural network uses those relationships to determine whether the entity exhibits malicious behavior. For example, attributes of the AI prompt 444 and potentially example AI prompt(s), example identified logs, example first log description(s), and example second log description(s) may be compared to determine similarities and differences between those attributes. In accordance with this example, the neural network may use those similarities and differences to determine whether the entity exhibits malicious behavior.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the prompt generation logic 426 employs a feed forward neural network to train the AI model 418, which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a malicious behavior model (e.g., to determine whether entities exhibit malicious behavior) by utilizing information, such as AI prompts (e.g., the AI prompt 444, including the identified logs 442, the first log description 446, and the second log description 448), contextual information, relationships between any of the foregoing, and AI-based confidences that are derived therefrom.

In example embodiments, the AI prompt 444 includes training logic, and the AI model 418 includes inference logic. The training logic is configured to train an AI algorithm that the inference logic uses to determine (e.g., infer) the AI-based confidences. For instance, the training logic may provide sample AI prompts (e.g., including sample identified logs, sample first log description(s), and sample second log description(s)) and sample contextual information as inputs to the AI algorithm to train the AI algorithm. The sample data may be labeled. The AI algorithm may be configured to derive relationships between the features (e.g., the AI prompt 444, including the identified logs 442, the first log description 446, and the second log description 448) and the resulting AI-based confidences. The inference logic is configured to utilize the AI algorithm, which is trained by the training logic, to determine the AI-based confidence when the features are provided as inputs to the algorithm.

In an example embodiment, the AI model 418 includes (e.g., is) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model and a Gemini^{®} model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

In another example embodiment, the AI model 418 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model and the Gemini^{®} model, developed and distributed by Google LLC.

In yet another example embodiment, the AI model 418 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of a log or a portion thereof.

In still another example embodiment, the AI model 418 includes multiple types of AI models. Weights may be applied to the responses generated by the respective types of AI models. For example, the AI model 418 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI model 418 may combine (e.g., sum) the first weighted response and the second weighted response to generate a response of the AI model 418.

In an embedding model embodiment, selecting the identified logs at step 202, identifying the potentially anomalous logs at step 204, and identifying the statistically anomalous logs at step 206 are performed using an embedding model (e.g., embedding model 412). In an aspect of this embodiment, the embedding model is an encoder-only model. One example of an encoder-only model is the bidirectional encoder representations from transformers (BERT^{™}) model, which is developed and distributed by Google LLC. In another aspect of this embodiment, the embedding model is a decoder-only model. In yet another aspect of this embodiment, the embedding model is an encoder-decoder model. One example of an encoder-decoder model is the FLAN-T5^{™} model, which is developed and distributed by Google LLC.

Any suitable representation criterion may be used to select the identified logs from the plurality of logs at step 202. For example, the representation criterion may be defined by a clustering algorithm or a gradient algorithm. In an example clustering embodiment, selecting the identified logs from the plurality of logs at step 202 includes clustering subsets of the plurality of logs into respective clusters by analyzing a plurality of embeddings that represent the plurality of logs using a clustering algorithm. The clustering algorithm may be density-based, distribution-based, centroid-based, or hierarchical-based. A density-based clustering algorithm clusters data points (e.g., logs), which are included in an area having a relatively high concentration of data points that is surrounded by area(s) having a relatively low concentration of data points, into a cluster. A distribution-based clustering algorithm clusters data points into clusters based on a distance of each data point to the center of each of multiple clusters, such that the data point is included in the cluster having a center that is closer to the data point than the center of each other cluster. A centroid-based clustering algorithm clusters data points into clusters based on a squared distance of each data point from each of multiple centroids in the data, such that the data point is included in the cluster corresponding to the centroid with the shortest squared distance to the data point. A hierarchical-based clustering algorithm clusters data points based on which of multiple hierarchical levels of a hierarchy includes the data points. For example, data points corresponding to a first hierarchical level are clustered into a first cluster; data points corresponding to a second hierarchical level are clustered into a second cluster, and so on. The subsets of the plurality of logs are clustered into the respective clusters as a result of the subsets corresponding to respective attributes. For example, a first subset of the plurality of logs may be clustered into a first cluster as a result of the logs in the first subset sharing a first attribute. A second subset of the plurality of logs may be clustered into a second cluster as a result of the logs in the second subset sharing a second attribute, and so on. In accordance with this embodiment, selecting the identified logs from the plurality of logs at step 202 further includes selecting the identified logs from the respective clusters. For example, a designated (e.g., fixed) number of identified logs (e.g., 1, 2, 3, or 10) may be selected from each cluster.

In an aspect of the clustering embodiment, the clustering algorithm is a K-means clustering algorithm. The K-means clustering algorithm is an unsupervised learning centroid-based clustering algorithm. In an aspect, the K-means clustering algorithm attempts to minimize the variance of data points within each cluster.

In another aspect of the clustering embodiment, the clustering algorithm is a density-based spatial clustering of applications with noise (DBSCAN) clustering algorithm. As indicated by its name, the DBSCAN clustering algorithm is a density-based clustering algorithm. The DBSCAN clustering algorithm defines arbitrarily shaped clusters based on density of data points in regions that are separated by areas of low-density.

Other examples of a clustering algorithm include but are not limited to a Gaussian mixture clustering algorithm, a balance iterative reducing and clustering using hierarchies (BIRCH) clustering algorithm, an affinity propagation clustering algorithm, a mean-shifting clustering algorithm, an ordering points to identify the clustering structure (OPTICS) clustering algorithm, and an agglomerative hierarchy clustering algorithm.

In some example embodiments, the identified logs are selected from the plurality of logs at step 202 using a greedy distance maximization technique. In accordance with the greedy distance maximization technique, a first log embedding is selected initially. For example, the first log embedding may be selected based on a reference point in embedding space. In an aspect, the reference point is a center (e.g., a mean or a median) of all embeddings. For instance, the first embedding may be selected because it is closest to the reference point. Next, a second embedding is selected based on the embedding being farthest from the first embedding in the embedding space. Next, for each remaining embedding, a minimum distance to each embedding that has been selected so far is determined, and a third embedding having the largest minimum distance to any selected embedding is selected. This means, for each remaining embedding, determining the distance to each selected embedding, selecting the minimum of these distances (the minimum distance), and identifying the largest of these minimum distances (the maximum minimum distance). This "max-min" operation ensures diversity because it ensures that subsequent selections are relatively distant from all embeddings that have been selected so far. This process repeats until a predetermined number, N, of embeddings have been selected.

In an example gradient embodiment, selecting the identified logs from the plurality of logs at step 202 includes one or more of the steps shown in flowchart 300 of FIG. 3. As shown in FIG. 3, the method of flowchart 300 begins at step 302. In step 302, a first identified log is selected from the plurality of logs as a result of a first embedding that represents the first identified log corresponding to a center (e.g., an average or a median) of a plurality of embeddings that represent the plurality of logs. In an example implementation, the sampling logic 420 selects the first identified log from the plurality of logs 440 as a result of the first embedding corresponding to the center of the plurality of embeddings.

At step 304, a second identified log is selected from the plurality of logs as a result of a distance between a second embedding that represents the second identified log and the first embedding being greater than distances between others of the plurality of embeddings (i.e., each of the plurality of embeddings, except the first and second embeddings) and the first embedding. In an example implementation, the sampling logic 420 selects the second identified log from the plurality of logs 440 as a result of the distance between the second embedding and the first embedding being greater than each of the distances between the other embeddings in the plurality of embeddings and the first embedding.

At step 306, a third identified log is selected from the plurality of logs as a result of a first distance or a second distance, whichever is less, being greater than third distances or fourth distances, whichever are less. The first distance is between a third embedding that represents the third identified log and the first embedding. The second distance is between the third embedding and the second embedding. The third distances are between others of the plurality of embeddings (i.e., each of the plurality of embeddings, except the first, second, and third embeddings) and the first embedding. The fourth distances are between the others of the plurality of embeddings (i.e., each of the plurality of embeddings, except the first, second, and third embeddings) and the second embedding. In an example implementation, the sampling logic 420 selects the third identified log from the plurality of logs 440 as a result of whichever is less of the first distance or the second distance being greater than whichever is less of each of the third distances or each of the fourth distances.

Each of the distances described above with regard to steps 304 and 306 may be any suitable type of distance, including but not limited to a Euclidian distance (a.k.a. Pythagorean distance), a Manhattan distance, or a Cosine distance. A Euclidian distance between two vectors is the length of the shortest line between the vectors. For example, the Euclidian distance, DE, between two 2-dimensional vectors (a, b) and (x, y) may be represented as DE = [(a - x)^2 + (b - y)^2)^(1/2). In another example, the Euclidian distance, DE, between two 3-dimensional vectors (a, b, c) and (x, y, z) may be represented as DE = [(a - x)^2 + (b - y)^2 + (c - z)^2)^(1/2). A Manhattan distance between two vectors is a sum of absolute differences between corresponding components of the vectors. For example, the Manhattan distance, DM, between two 2-dimensional vectors (a, b) and (x, y) may be represented as DM = Abs(a - x) + Abs(b - y). In another example, the Manhattan distance, DM, between two 3-dimensional vectors (a, b, c) and (x, y, z) may be represented as DM = Abs(a - x) + Abs(b - y) + Abs(c - z). A Cosine distance between two vectors is equal to a dot product of the vectors divided by a product of the magnitudes of the vectors. Accordingly, the Cosine distance, DC, between vectors X and Y may be represented as DC = (X · Y) / (∥X∥ * ∥Y∥).

It will be recognized that flowchart 300 may include additional steps to select additional identified logs (a fourth identified log, a fifth identified log, and so on) from the plurality of logs.

In some example embodiments, one or more steps 202, 204, 206, and/or 208 of flowchart 200 may not be performed. Moreover, steps in addition to or in lieu of steps 202, 204, 206, and/or 208 may be performed. For instance, in an example embodiment, the method of flowchart 200 further includes receiving a response to the AI prompt from the AI model. The response indicates whether the entity exhibits malicious behavior. In an example implementation, the trigger logic 416 receives a response 438 to the AI prompt 444 from the AI model 418. The response 438 indicates whether the entity exhibits malicious behavior. In accordance with this embodiment, the method of flowchart 200 further includes, as a result of receiving the response to the AI prompt from the AI model, execution of an instruction that causes a statement to be provided via a user interface is automatically triggered. The statement indicates whether the entity exhibits malicious behavior. In an example implementation, as a result of receiving the response 438 to the AI prompt 444 from the AI model 418, the trigger logic 416 automatically triggers execution of an instruction that causes a statement 450 to be provided via a user interface. The statement 450 indicates whether the entity exhibits malicious behavior.

In another example embodiment, triggering the AI model to determine whether the entity exhibits malicious behavior at step 208 includes triggering the AI model to generate a report, which indicates whether the entity exhibits malicious behavior. In an example implementation, the prompt generation logic 426 triggers the report generation logic 428 to generate a report 452, which indicates whether the entity exhibits malicious behavior. In accordance with this embodiment, the method of flowchart 200 further includes, as a result of the AI model generating the report, receiving an assessment of the report from a user. For instance, the user may be an IT professional (e.g., a security analyst or a system administrator) or an end user. The assessment indicates whether the entity exhibits the malicious behavior from a perspective of the user. In an example implementation, the training logic 414 receives a report assessment 434, which is an assessment of the report 452, from the user as a result of the report generation logic 428 generating the report 452. The report assessment 434 indicates whether the entity exhibits the malicious behavior from the perspective of the user. In further accordance with this embodiment, the method of flowchart 200 further includes training the AI model using the assessment. In an example implementation, the training logic 414 trains the AI model 418 using the report assessment 434. In accordance with this implementation, the training logic 414 generates training instructions 436 to train the AI model. 418.

It will be recognized that the computing system 400 may not include one or more of the sampling and embedding AI logic 408, the store 410, the embedding model 412, the training logic 414, the trigger logic 416, the AI model 418, the sampling logic 420, the first log identification logic 422, the second log identification logic 424, the prompt generation logic 426, and/or the report generation logic 428. Furthermore, the computing system 400 may include components in addition to or in lieu of the sampling and embedding AI logic 408, the store 410, the embedding model 412, the training logic 414, the trigger logic 416, the AI model 418, the sampling logic 420, the first log identification logic 422, the second log identification logic 424, the prompt generation logic 426, and/or the report generation logic 428.

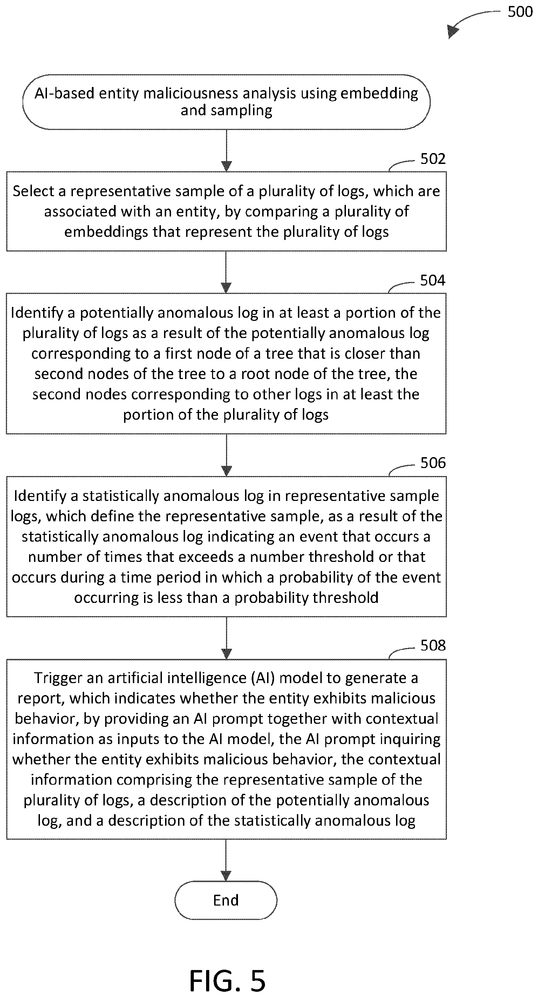

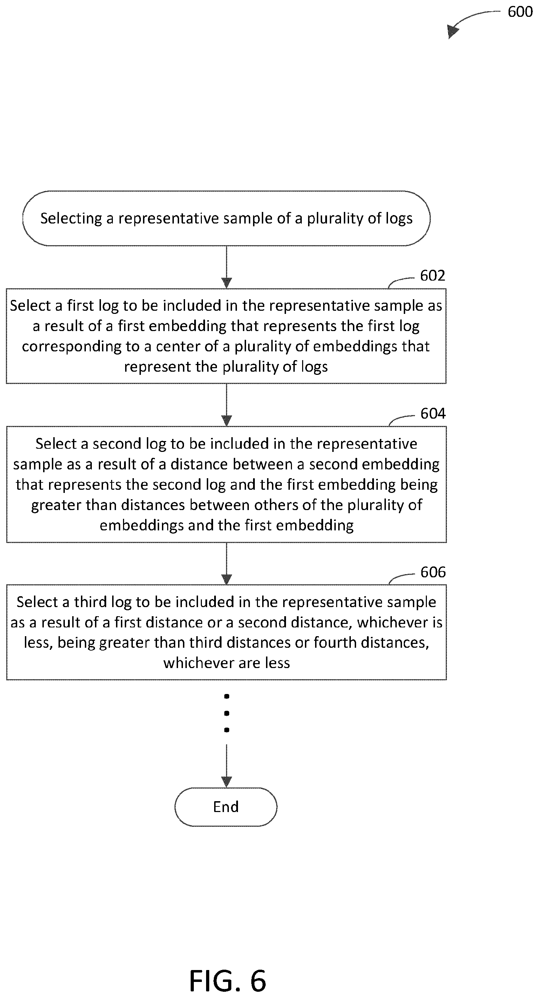

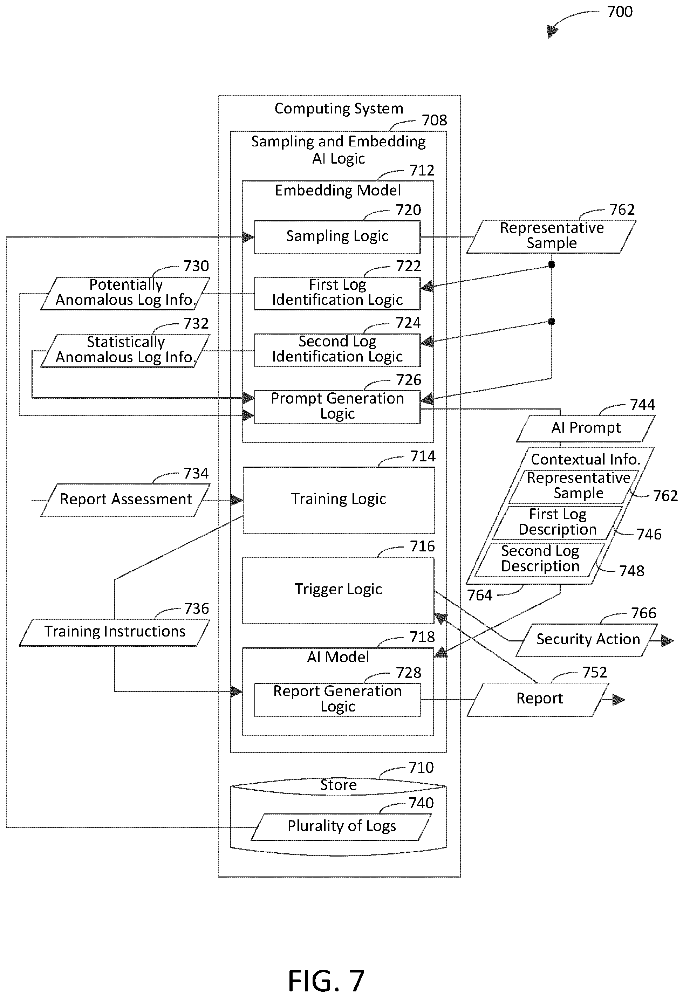

FIG. 5 depicts a flowchart 500 of another example method for performing an AI-based entity maliciousness analysis using embedding and sampling in accordance with an embodiment. FIG. 6 depicts a flowchart 600 of an example method for selecting a representative sample of a plurality of logs in accordance with an embodiment. Flowcharts 500 and 600 may be performed by the first server(s) 106A shown in FIG. 1, for example. For illustrative purposes, flowcharts 500 and 600 are described with respect to a computing system 700 shown in FIG. 7, which is an example implementation of the first server(s) 106A. As shown in FIG. 7, the computing system 700 includes sampling and embedding AI logic 708 and a store 710. The sampling and embedding AI logic 708 includes an embedding model 712, training logic 714, trigger logic 716, and an AI model 718. The embedding model 712 includes sampling logic 720, first log identification logic 722, second log identification logic 724, and prompt generation logic 726. The AI model 718 includes report generation logic 728. The store 710 may be any suitable type of store. The store 710 is shown to store a plurality of logs 740 for non-limiting, illustrative purposes. Further structural and operational embodiments will be apparent to persons skilled in the relevant art(s) based on the discussion regarding flowcharts 500 and 600.

As shown in FIG. 5, the method of flowchart 500 begins at step 502. In step 502, a representative sample of a plurality of logs, which are associated with an entity, is selected by comparing a plurality of embeddings that represent the plurality of logs. The representative sample includes fewer than all of the plurality of logs. In an aspect, step 502 is performed in response to a triggering event related to the entity. In an example implementation, the sampling logic 720 selects a representative sample 762 of the plurality of logs 740, which are associated with the entity, by comparing a plurality of embeddings that represent the plurality of logs 740. The representative sample includes fewer than all of the plurality of logs 740. In an aspect, the sampling logic 720 generates a plurality of embeddings to represent the plurality of logs. For instance, each embedding may represent a respective word or combination of words in a corresponding log. For example, each embedding may represent a log line (e.g., row) in a log. In accordance with this example, a log that includes N log lines is represented by N embeddings, where N is a positive integer. In further accordance with this example, first embeddings may be created to represent respective portions (e.g., words) in a log line, and the first embeddings may be combined to provide a second embedding that represents an entirety of the log line. For instance, the first embeddings may be combined by calculating a mean or a median of the first embeddings to provide the second embedding. In another example, each embedding may represent an entirety of a respective log. In another aspect, the sampling logic 720 uses contrastive learning to select the representative sample 762 of the plurality of logs 740.

In an example embodiment, selecting the representative sample of the plurality of logs at step 502 includes selecting identified logs from the plurality of logs to define the representative sample as a result of the identified logs pertaining to security of the entity.

At step 504, a potentially anomalous log is identified in at least a portion of the plurality of logs (e.g., in the representative sample or in an entirety of the plurality of logs) as a result of the potentially anomalous log corresponding to a first node of a tree that is closer than second nodes of the tree to a root node of the tree (e.g., based on a selected feature, such as an embedded representation of logs). The second nodes correspond to other logs in at least the portion of the plurality of logs. In an aspect, a path length from the first node to the root node is no greater than (e.g., is less than) a path length from each of the second nodes to the root node. In another aspect, the potentially anomalous log is identified at step 504 using an isolation forest technique. In yet another aspect, the potentially anomalous log is identified at step 504 using an isolation-based neural network embeddings (INNE) technique. In an example implementation, the first log identification logic 722 identifies the potentially anomalous log in at least a portion of the plurality of logs 740 (e.g., in the representative sample 762 or in an entirety of the plurality of logs 740) as a result of the potentially anomalous log corresponding to the first node of the tree that is closer than the second nodes of the tree to the root node of the tree. In accordance with this implementation, the second nodes correspond to other logs in at least the portion of the plurality of logs. The first log identification logic 722 generates potentially anomalous log information 730 to describe the potentially anomalous log.

At step 506, a statistically anomalous log is identified in representative sample logs, which define the representative sample, as a result of the statistically anomalous log indicating an event that occurs a number of times that exceeds a number threshold or that occurs during a time period in which a probability of the event occurring is less than a probability threshold. In an aspect, the statistically anomalous log is identified by performing a statistical analysis on the representative sample. In accordance with this aspect, the statistical analysis includes making a determination that the event indicated by the embedding of the statistically anomalous log occurs a number of times that exceeds the number threshold or occurs during a time period in which a probability of the event occurring is less than the probability threshold. In an example implementation, the second log identification logic 724 identifies the statistically anomalous log in representative sample logs, which define the representative sample 762, as a result of the statistically anomalous log indicating an event that occurs a number of times that exceeds the number threshold or that occurs during a time period in which the probability of the event occurring is less than the probability threshold. The second log identification logic 724 generates statistically anomalous log information 732 to describe the statistically anomalous log.

In an example embodiment, the statistically anomalous log is identified at step 506 using a frequency analysis technique.

In another example embodiment, the statistically anomalous log is identified at step 506 using a p-value technique.

At step 508, an AI model is triggered to generate a report, which indicates whether the entity exhibits malicious behavior, by providing an AI prompt together with contextual information as inputs to the AI model. The AI prompt inquires whether the entity exhibits malicious behavior. For instance, the AI prompt may request that the AI model determine whether the entity exhibits the malicious behavior. The contextual information includes the representative sample of the plurality of logs, a description of the potentially anomalous log, and a description of the statistically anomalous log. The contextual information includes context regarding the AI prompt. In an example implementation, the prompt generation logic 726 triggers the AI model 718 to generate a report 752, which indicates whether the entity exhibits malicious behavior, by providing an AI prompt 744 together with contextual information 764 as inputs to the AI model 718. The AI prompt 744 inquires whether the entity exhibits malicious behavior. For instance, the AI prompt 744 may request that the AI model 718 determine whether the entity exhibits malicious behavior. The contextual information 764 includes the representative sample 762 of the plurality of logs 740, a first log description 746, and a second log description 748. The first log description 746 is a description of the potentially anomalous log. In an aspect, the prompt generation logic 726 generates the first log description 746 based on (e.g., based at least in part on) the potentially anomalous log information 730. The second log description 748 is a description of the statistically anomalous log. In an aspect, the prompt generation logic 726 generates the second log description 748 based on the statistically anomalous log information 732. The contextual information 764 includes context regarding the AI prompt 744.

In an example embodiment, the prompt generation logic 726 causes (e.g., triggers) the AI model 718 to analyze (e.g., develop and/or refine an understanding of) the AI prompt 744, the contextual information 764 (including the representative sample 762, the first log description 746, and the second log description 748), relationships between any of the foregoing, and confidences in those relationships. For example, the prompt generation logic 726 may cause the AI model 718 to compare attributes of the AI prompt 744, the contextual information 764 (including the representative sample 762, the first log description 746, and the second log description 748), other contextual information (which may include sample AI prompt(s), sample representative sample(s), sample first log description(s), and sample second log description(s)) using artificial intelligence to determine whether the entity exhibits malicious behavior.

In some example embodiments, the AI model 718 includes a neural network that uses the artificial intelligence to determine (e.g., predict) relationships between the AI prompt 744, the contextual information 764 (including the representative sample 762, the first log description 746, and the second log description 748), the other contextual information, and confidences in the relationships. The neural network uses those relationships to determine whether the entity exhibits malicious behavior. For example, attributes of the AI prompt 744 and potentially example AI prompt(s), example representative sample(s), example first log description(s), and example second log description(s) may be compared to determine similarities and differences between those attributes. In accordance with this example, the neural network may use those similarities and differences to determine whether the entity exhibits malicious behavior.

Examples of a neural network include but are not limited to a feed forward neural network and a transformer-based neural network. In an example embodiment, the prompt generation logic 726 employs a feed forward neural network to train the AI model 718, which is used to determine AI-based confidences. Such AI-based confidences may be used to determine likelihoods that events will occur. In another example embodiment, the AI model 718 includes a transformer-based neural network, which generates a malicious behavior model (e.g., to determine whether entities exhibit malicious behavior) by utilizing information, such as AI prompts (e.g., the AI prompt 744), contextual information (e.g., the contextual information 764, including the representative sample 762, the first log description 746, and the second log description 748), relationships between any of the foregoing, and AI-based confidences that are derived therefrom.

In example embodiments, the AI prompt 744 includes training logic, and the AI model 718 includes inference logic. The training logic is configured to train an AI algorithm that the inference logic uses to determine (e.g., infer) the AI-based confidences. For instance, the training logic may provide sample AI prompts and sample contextual information (e.g., including sample representative sample(s), sample first log description(s), and sample second log description(s)) as inputs to the AI algorithm to train the AI algorithm. The sample data may be labeled. The AI algorithm may be configured to derive relationships between the features (e.g., the AI prompt 744 and the contextual information 764, including the representative sample 762, the first log description 746, and the second log description 748) and the resulting AI-based confidences. The inference logic is configured to utilize the AI algorithm, which is trained by the training logic, to determine the AI-based confidence when the features are provided as inputs to the algorithm.

In an example embodiment, the AI model 718 includes (e.g., is) a generative language model. In another example embodiment, the AI model 718 includes a large language model (LLM). In yet another example embodiment, the AI model 718 includes an embedding model. In still another example embodiment, the AI model 718 includes multiple types of AI models. Weights may be applied to the responses generated by the respective types of AI models. For example, the AI model 718 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI model 718 may combine (e.g., sum) the first weighted response and the second weighted response to generate a response of the AI model 718.

In an embedding model embodiment, selecting the representative sample of the plurality of logs at step 502, identifying the potentially anomalous log at step 504, and identifying the statistically anomalous log at step 506 are performed using an embedding model (e.g., embedding model 712). In an aspect of this embodiment, the embedding model is an encoder-only model. In another aspect of this embodiment, the embedding model is a decoder-only model. In yet another aspect of this embodiment, the embedding model is an encoder-decoder model.

In an example clustering embodiment, selecting the representative sample of the plurality of logs at step 502 includes clustering subsets of the plurality of logs into respective clusters by analyzing the plurality of embeddings that represent the plurality of logs using a clustering algorithm. The clustering algorithm may be any suitable type of clustering algorithm, including but not limited to a K-means clustering algorithm, a DBSCAN clustering algorithm, a Gaussian mixture clustering algorithm, a BIRCH clustering algorithm, an affinity propagation clustering algorithm, a mean-shifting clustering algorithm, an OPTICS clustering algorithm, and/or an agglomerative hierarchy clustering algorithm. The subsets of the plurality of logs are clustered into the respective clusters as a result of the subsets corresponding to respective attributes. In accordance with this embodiment, selecting the representative sample of the plurality of logs at step 502 further includes selecting logs from the respective clusters to define the representative sample.

In some example embodiments, the representative sample of the plurality of logs is selected at step 502 using a greedy distance maximization technique.

In an example gradient embodiment, selecting the representative sample of the plurality of logs at step 502 includes one or more of the steps shown in flowchart 600 of FIG. 6. As shown in FIG. 6, the method of flowchart 600 begins at step 602. In step 602, a first log is selected to be included in the representative sample as a result of a first embedding that represents the first log corresponding to a center (e.g., a mean or a median) of a plurality of embeddings that represent the plurality of logs. In an example implementation, the sampling logic 720 selects the first log to be included in the representative sample 762 as a result of the first embedding corresponding to the center of the plurality of embeddings.

At step 604, a second log is selected to be included in the representative sample as a result of a distance between a second embedding that represents the second log and the first embedding being greater than distances between others of the plurality of embeddings (i.e., each of the plurality of embeddings, except the first and second embeddings) and the first embedding. In an example implementation, the sampling logic 720 selects the second log to be included in the representative sample 762 as a result of the distance between the second embedding and the first embedding being greater than each of the distances between the other embeddings in the plurality of embeddings and the first embedding.

At step 606, a third log is selected to be included in the representative sample as a result of a first distance or a second distance, whichever is less, being greater than third distances or fourth distances, whichever are less. The first distance is between a third embedding that represents the third log and the first embedding. The second distance is between the third embedding and the second embedding. The third distances are between others of the plurality of embeddings (i.e., each of the plurality of embeddings, except the first, second, and third embeddings) and the first embedding. The fourth distances are between the others of the plurality of embeddings (i.e., each of the plurality of embeddings, except the first, second, and third embeddings) and the second embedding. In an example implementation, the sampling logic 720 selects the third log to be included in the representative sample 762 as a result of whichever is less of the first distance or the second distance being greater than whichever is less of each of the third distances or each of the fourth distances.

Each of the distances described above with regard to steps 604 and 606 may be any suitable type of distance, including but not limited to a Euclidian distance, a Manhattan distance, or a Cosine distance. It will be recognized that flowchart 600 may include additional steps to select additional logs (a fourth log, a fifth log, and so on) to be included in the representative sample.

In some example embodiments, one or more steps 502, 504, 506, and/or 508 of flowchart 500 may not be performed. Moreover, steps in addition to or in lieu of steps 502, 504, 506, and/or 508 may be performed. For instance, in an example embodiment, the method of flowchart 500 further includes, as a result of receiving the report from the AI model, automatically triggering execution of an instruction that causes a security action to be performed with regard to the entity. In an example implementation, as a result of receiving the report 752 from the AI model 718, the trigger logic 716 automatically triggers execution of an instruction that causes a security action 766 to be performed with regard to the entity. Performance of the security action may include blocking access of a user to a resource, changing permissions (e.g., read write, execute, full control) with regard to a user and/or a resource, providing an alert to a user (e.g., an IT professional or an end user), and so on.

In another example embodiment, the method of flowchart 500 further includes, as a result of the AI model generating the report, receiving an assessment of the report from a user (e.g., an IT professional or an end user). The assessment indicates whether the entity exhibits the malicious behavior from a perspective of the user. In an example implementation, the training logic 714 receives a report assessment 734, which is an assessment of the report 752, from the user as a result of the report generation logic 728 generating the report 752. The report assessment 734 indicates whether the entity exhibits the malicious behavior from the perspective of the user. In further accordance with this embodiment, the method of flowchart 500 further includes training the AI model using the assessment. In an example implementation, the training logic 714 trains the AI model 718 using the report assessment 734. In accordance with this implementation, the training logic 714 generates training instructions 736 to train the AI model. 718.

It will be recognized that the computing system 700 may not include one or more of the sampling and embedding AI logic 708, the store 710, the embedding model 712, the training logic 714, the trigger logic 716, the AI model 718, the sampling logic 720, the first log identification logic 722, the second log identification logic 724, the prompt generation logic 726, and/or the report generation logic 728. Furthermore, the computing system 700 may include components in addition to or in lieu of the sampling and embedding AI logic 708, the store 710, the embedding model 712, the training logic 714, the trigger logic 716, the AI model 718, the sampling logic 720, the first log identification logic 722, the second log identification logic 724, the prompt generation logic 726, and/or the report generation logic 728.

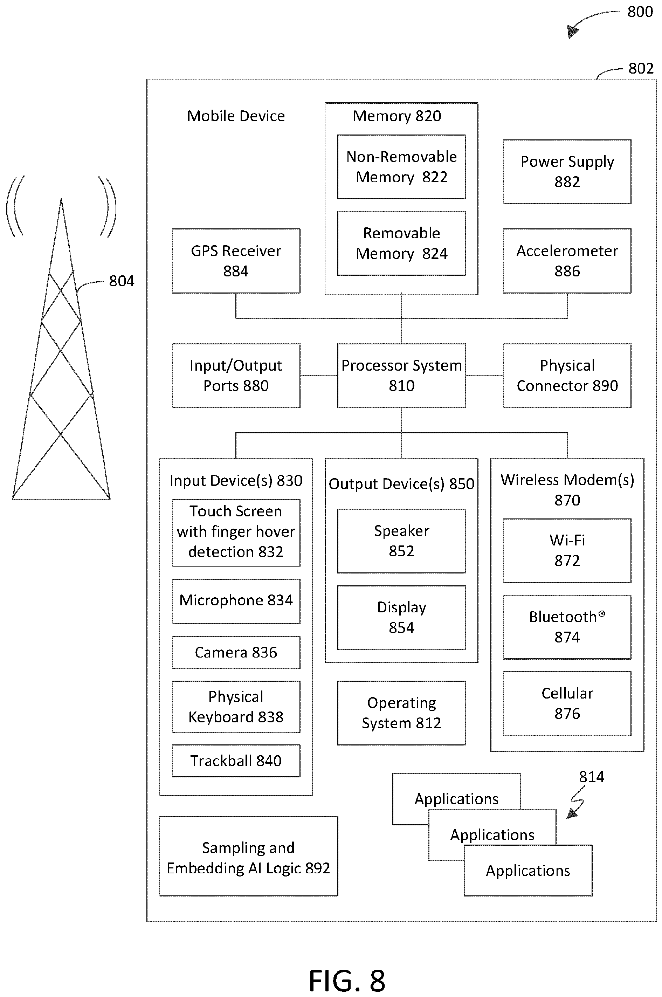

FIG. 8 is a system diagram of an example mobile device 800 including a variety of optional hardware and software components, shown generally as 802. Any components 802 in the mobile device may communicate with any other component, though not all connections are shown, for ease of illustration. The mobile device 800 may be any of a variety of computing devices (e.g., cell phone, smartphone, handheld computer, Personal Digital Assistant (PDA), etc.) and may allow wireless two-way communications with one or more mobile communications networks 804, such as a cellular or satellite network, or with a local area or wide area network.

The mobile device 800 includes a processor system 810 (e.g., signal processor, microprocessor, ASIC, or other control and processing logic circuitry) for performing such tasks as signal coding, data processing, input/output processing, power control, and/or other functions. An operating system 812 may control the allocation and usage of the components 802 and support for one or more applications 814 (a.k.a. application programs). The applications 814 may include common mobile computing applications (e.g., email applications, calendars, contact managers, web browsers, messaging applications) and any other computing applications (e.g., word processing applications, mapping applications, media player applications).

The mobile device 800 includes sampling and embedding AI logic 892, which is operable in a manner similar to the sampling and embedding AI logic 108 described above with reference to FIG. 1, the sampling and embedding AI logic 408 described above with reference to FIG. 4, and/or the sampling and embedding AI logic 708 described above with reference to FIG. 7.

The mobile device 800 includes memory 820. The memory 820 may include non-removable memory 822 and/or removable memory 824. The non-removable memory 822 may include random access memory (RAM), read-only memory (ROM), flash memory, a hard disk, or other well-known memory storage technologies. The removable memory 824 may include flash memory or a Subscriber Identity Module (SIM) card, which is well known in Global System for Mobile Communications (GSM) systems, or other well-known memory storage technologies, such as "smart cards." The memory 820 may store data and/or code for running the operating system 812 and the applications 814. Example data may include web pages, text, images, sound files, video data, or other data sets to be sent to and/or received from one or more network servers or other devices via one or more wired or wireless networks. Memory 820 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 800 may support one or more input devices 830, such as a touch screen 832, microphone 834, camera 836, physical keyboard 838 and/or trackball 840 and one or more output devices 850, such as a speaker 852 and a display 854. Touch screens, such as the touch screen 832, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 832 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 832 and display 854 may be combined in a single input/output device. The input devices 830 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 812 or applications 814 may include speech-recognition software as part of a voice control interface that allows a user to operate the mobile device 800 via voice commands. Furthermore, the mobile device 800 may include input devices and software that allows for user interaction via a user's spatial gestures, such as detecting and interpreting gestures to provide input to a gaming application.

Wireless modem(s) 870 may be coupled to antenna(s) (not shown) and may support two-way communications between the processor system 810 and external devices, as is well understood in the art. The modem(s) 870 are shown generically and may include a cellular modem 876 for communicating with the mobile communication network 804 and/or other radio-based modems (e.g., Bluetooth^{®} 874 and/or Wi-Fi 872). At least one of the wireless modem(s) 870 is typically configured for communication with one or more cellular networks, such as a GSM network for data and voice communications within a single cellular network, between cellular networks, or between the mobile device and a public switched telephone network (PSTN).

The mobile device 800 may further include at least one input/output port 880, a power supply 882, a satellite navigation system receiver 884, such as a Global Positioning System (GPS) receiver, an accelerometer 886, and/or a physical connector 890, which may be a universal serial bus (USB) port, IEEE 1394 (FireWire) port, and/or RS-232 port. The illustrated components 802 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the sampling and embedding AI logic 108, the sampling and embedding AI logic 408, the embedding model 412, the training logic 414, the trigger logic 416, the AI model 418, the sampling logic 420, the first log identification logic 422, the second log identification logic 424, the prompt generation logic 426, the report generation logic 428, the sampling and embedding AI logic 708, the embedding model 712, the training logic 714, the trigger logic 716, the AI model 718, the sampling logic 720, the first log identification logic 722, the second log identification logic 724, the prompt generation logic 726, the report generation logic 728, flowchart 200, flowchart 300, flowchart 500, and/or flowchart 600 may be implemented in hardware, software, firmware, or any combination thereof.

For example, any one or more of the sampling and embedding AI logic 108, the sampling and embedding AI logic 408, the embedding model 412, the training logic 414, the trigger logic 416, the AI model 418, the sampling logic 420, the first log identification logic 422, the second log identification logic 424, the prompt generation logic 426, the report generation logic 428, the sampling and embedding AI logic 708, the embedding model 712, the training logic 714, the trigger logic 716, the AI model 718, the sampling logic 720, the first log identification logic 722, the second log identification logic 724, the prompt generation logic 726, the report generation logic 728, flowchart 200, flowchart 300, flowchart 500, and/or flowchart 600 may be implemented, at least in part, as computer program code configured to be executed in one or more processors.

In another example, any one or more of the sampling and embedding AI logic 108, the sampling and embedding AI logic 408, the embedding model 412, the training logic 414, the trigger logic 416, the AI model 418, the sampling logic 420, the first log identification logic 422, the second log identification logic 424, the prompt generation logic 426, the report generation logic 428, the sampling and embedding AI logic 708, the embedding model 712, the training logic 714, the trigger logic 716, the AI model 718, the sampling logic 720, the first log identification logic 722, the second log identification logic 724, the prompt generation logic 726, the report generation logic 728, flowchart 200, flowchart 300, flowchart 500, and/or flowchart 600 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

(A1) An example system (Figure 1, 102A-102M, 106A-106N; Figure 4, 400; Figure 8, 802; Figure 9, 900) comprises a processor system (Figure 8, 810; Figure 9, 902) and a memory (Figure 8, 820, 822, 824; Figure 9, 904, 908, 910) that stores computer-executable instructions. The computer-executable instructions are executable by the processor system to at least select (Figure 2, 202) identified logs (Figure 4, 442) from a plurality of logs (Figure 4, 440), which are associated with an entity, as a result of embeddings, which represent the identified logs, satisfying a representation criterion. The computer-executable instructions are executable by the processor system further to at least identify (Figure 2, 204) potentially anomalous logs in at least a portion of the plurality of logs as a result of differences between embeddings of the potentially anomalous logs and a reference embedding that corresponds to at least the portion of the plurality of logs being greater than differences between embeddings of other logs in at least the portion of the plurality of logs and the reference embedding. The computer-executable instructions are executable by the processor system further to at least identify (Figure 2, 206) statistically anomalous logs in the identified logs as a result of events indicated by embeddings of the statistically anomalous logs occurring more than an expected number of times during a period of time. The computer-executable instructions are executable by the processor system further to at least trigger (Figure 2, 208) an artificial intelligence (AI) model (Figure 4, 418) to determine whether the entity exhibits malicious behavior by providing an AI prompt (Figure 4, 444), which comprises the identified logs, a description (Figure 4, 446) of the potentially anomalous logs, and a description (Figure 4, 448) of the statistically anomalous logs, as an input to the AI model. The AI prompt inquires whether the entity exhibits malicious behavior.

(A2) In the example system of A1, wherein the computer-executable instructions are executable by the processor system further to at least: receive a response to the AI prompt from the AI model, the response indicating whether the entity exhibits malicious behavior; and as a result of receiving the response to the AI prompt from the AI model, automatically trigger execution of an instruction that causes a statement to be provided via a user interface, the statement indicating whether the entity exhibits malicious behavior.

(A3) In the example system of any of A1-A2, wherein the computer-executable instructions are executable by the processor system to select the identified logs from the plurality of logs by performing at least the following operations: select a first identified log from the plurality of logs as a result of a first embedding that represents the first identified log corresponding to a center of a plurality of embeddings that represent the plurality of logs; and select a second identified log from the plurality of logs as a result of a distance between a second embedding that represents the second identified log and the first embedding being greater than distances between others of the plurality of embeddings and the first embedding.

(A4) In the example system of any of A1-A3, wherein the computer-executable instructions are executable by the processor system to select the identified logs from the plurality of logs further by performing at least the following operation: select a third identified log from the plurality of logs as a result of a first distance or a second distance, whichever is less, being greater than third distances or fourth distances, whichever are less; wherein the first distance is between a third embedding that represents the third identified log and the first embedding; wherein the second distance is between the third embedding and the second embedding; wherein the third distances are between others of the plurality of embeddings and the first embedding; and wherein the fourth distances are between the others of the plurality of embeddings and the second embedding.

(A5) In the example system of any of A1-A4, wherein the computer-executable instructions are executable by the processor system to at least: select the first identified log from the plurality of logs as a result of the embedding that represents the first identified log corresponding to an average of the plurality of embeddings.

(A6) In the example system of any of A1-A5, wherein the computer-executable instructions are executable by the processor system to select the identified logs from the plurality of logs by performing at least the following operations: cluster subsets of the plurality of logs into respective clusters by analyzing a plurality of embeddings that represent the plurality of logs using a clustering algorithm as a result of the subsets corresponding to respective attributes; and select the identified logs from the respective clusters.

(A7) In the example system of any of A1-A6, wherein the computer-executable instructions are executable by the processor system to at least: selecting the identified logs from the plurality of logs as a result of the identified logs pertaining to security of the entity.

(A8) In the example system of any of A1-A7, wherein the computer-executable instructions are executable by the processor system to at least: select the identified logs, identify the potentially anomalous logs, and identify the statistically anomalous logs using an embedding model; and wherein the embedding model is an encoder-only model.

(A9) In the example system of any of A1-A8, wherein the computer-executable instructions are executable by the processor system to at least: select the identified logs, identify the potentially anomalous logs, and identify the statistically anomalous logs using an embedding model; and wherein the embedding model is a decoder-only model.

(A10) In the example system of any of A1-A9, wherein the computer-executable instructions are executable by the processor system to at least: select the identified logs, identify the potentially anomalous logs, and identify the statistically anomalous logs using an embedding model; and wherein the embedding model is an encoder-decoder model.

(B1) An example method is implemented by a computing system (Figure 1, 102A-102M, 106A-106N; Figure 7, 700; Figure 8, 802; Figure 9, 900). The method comprises selecting (Figure 5, 502) a representative sample (Figure 7, 762) of a plurality of logs (Figure 7, 740), which are associated with an entity, by comparing a plurality of embeddings that represent the plurality of logs. The representative sample comprises fewer than all of the plurality of logs. The method further comprises identifying (Figure 5, 504) a potentially anomalous log in at least a portion of the plurality of logs as a result of the potentially anomalous log corresponding to a first node of a tree that is closer than second nodes of the tree to a root node of the tree. The second nodes correspond to other logs in at least the portion of the plurality of logs. The method further comprises identifying (Figure 5, 506) a statistically anomalous log in representative sample logs, which define the representative sample, as a result of the statistically anomalous log indicating an event that occurs a number of times that exceeds a number threshold or that occurs during a time period in which a probability of the event occurring is less than a probability threshold. The method further comprises triggering (Figure 5, 508) an artificial intelligence (AI) model (Figure 7, 718) to generate a report (Figure 7, 752), which indicates whether the entity exhibits malicious behavior, by providing an AI prompt (Figure 7, 744) together with contextual information (Figure 7, 764) as inputs to the AI model. The AI prompt inquires whether the entity exhibits malicious behavior. The contextual information comprises the representative sample of the plurality of logs, a description (Figure 7, 746) of the potentially anomalous log, and a description (Figure 7, 748) of the statistically anomalous log. The contextual information comprises context regarding the AI prompt.

(B2) In the example method of B1, further comprising: as a result of receiving the report from the AI model, automatically triggering execution of an instruction that causes a security action to be performed with regard to the entity.

(B3) In the example method of any of B1-B2, wherein selecting the representative sample of the plurality of logs comprises: selecting a first log to be included in the representative sample as a result of a first embedding that represents the first log corresponding to a center of a plurality of embeddings that represent the plurality of logs; and selecting a second log to be included in the representative sample as a result of a distance between a second embedding that represents the second log and the first embedding being greater than distances between others of the plurality of embeddings and the first embedding.

(B4) In the example method of any of B1-B3, wherein selecting the representative sample of the plurality of logs further comprises: selecting a third log to be included in the representative sample as a result of a first distance or a second distance, whichever is less, being greater than third distances or fourth distances, whichever are less; wherein the first distance is between a third embedding that represents the third log and the first embedding; wherein the second distance is between the third embedding and the second embedding; wherein the third distances are between others of the plurality of embeddings and the first embedding; and wherein the fourth distances are between the others of the plurality of embeddings and the second embedding.

(B5) In the example method of any of B 1-B4, wherein selecting the first log comprises: selecting the first log to be included in the representative sample as a result of the embedding that represents the first log corresponding to a median of the plurality of embeddings.

(B6) In the example method of any of B1-B5, wherein selecting the representative sample of the plurality of logs comprises: clustering subsets of the plurality of logs into respective clusters by analyzing the plurality of embeddings that represent the plurality of logs using a clustering algorithm as a result of the subsets corresponding to respective attributes; and selecting logs from the respective clusters to define the representative sample.

(B7) In the example method of any of B1-B6, wherein the method further comprises: as a result of the AI model generating the report, receiving an assessment of the report from a user, the assessment indicating whether the entity exhibits the malicious behavior from a perspective of the user; and training the AI model using the assessment.

(B8) In the example method of any of B1-B7, wherein identifying the potentially anomalous log comprises: identifying the potentially anomalous log using an isolation forest technique.

(B9) In the example method of any of B1-B8, wherein identifying the statistically anomalous log comprises: identifying the statistically anomalous log using a frequency analysis technique.

(B10) In the example method of any of B1-B9, wherein identifying the statistically anomalous log comprises: identifying the statistically anomalous log using a p-value technique.

(C1) An example computer program product (Figure 8, 824; Figure 9, 918, 922) comprises a computer-readable storage medium having instructions recorded thereon for enabling a processor-based system (Figure 1, 102A-102M, 106A-106N; Figure 7, 700; Figure 8, 802; Figure 9, 900) to perform operations. The operations comprise selecting (Figure 5, 502) a representative sample (Figure 7, 762) of a corpus of data (Figure 7, 740), which is associated with an entity, by comparing a plurality of embeddings that represent the corpus of data. The representative sample comprises less than all of the corpus of data. The operations further comprise identifying (Figure 5, 504) a potentially anomalous data point in at least a portion of the corpus of data as a result of the potentially anomalous data point corresponding to a first node of a tree that is closer than second nodes of the tree to a root node of the tree. The second nodes correspond to other data points in at least the portion of the corpus of data. The operations further comprise identifying (Figure 5, 506) a statistically anomalous data point in representative sample data points, which define the representative sample, as a result of the statistically anomalous data point indicating an event that occurs a number of times that exceeds a number threshold or that occurs during a time period in which a probability of the event occurring is less than a probability threshold. The operations further comprise triggering (Figure 5, 508) an artificial intelligence (AI) model (Figure 7, 718) to generate a report (Figure 7, 752), which indicates whether the entity exhibits malicious behavior, by providing an AI prompt (Figure 7, 744) together with contextual information (Figure 7, 764) as inputs to the AI model. The AI prompt inquires whether the entity exhibits malicious behavior. The contextual information comprises the representative sample of the corpus of data, a description (Figure 7, 746) of the potentially anomalous data point, and a description (Figure 7, 748) of the statistically anomalous data point. The contextual information comprises context regarding the AI prompt.

### III. Example Computer System

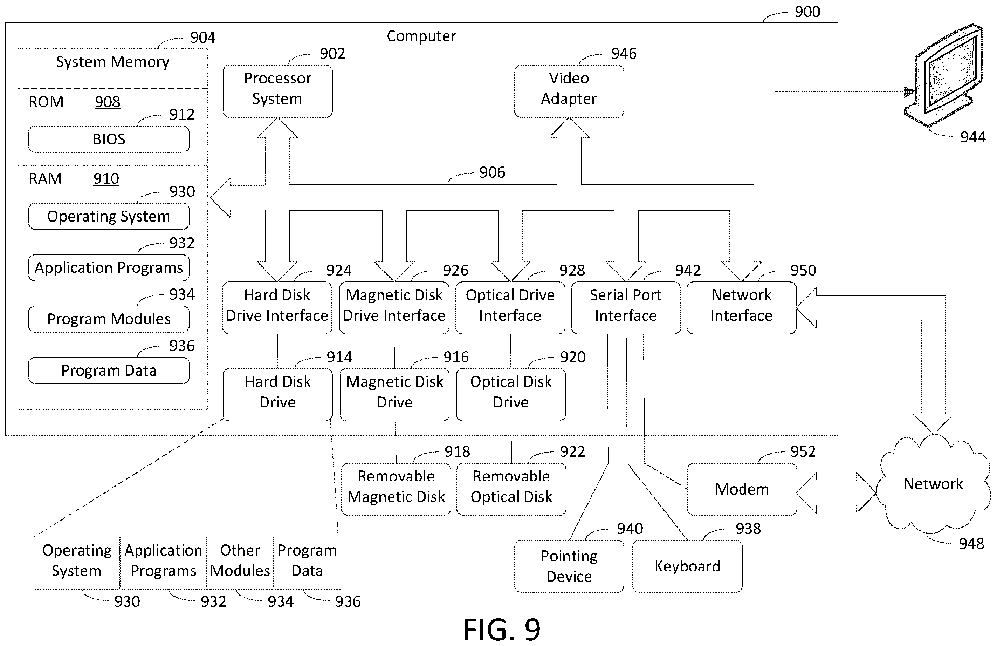

FIG. 9 depicts an example computer 900 in which embodiments may be implemented. Any one or more of the user devices 102A-102M and/or any one or more of the servers 106A-106N shown in FIG. 1, the computing system 400 shown in FIG. 4, and/or the computing system 700 shown in FIG. 7 may be implemented using computer 900, including one or more features of computer 900 and/or alternative features. Computer 900 may be a general-purpose computing device in the form of a conventional personal computer, a mobile computer, or a workstation, for example, or computer 900 may be a special purpose computing device. The description of computer 900 provided herein is provided for purposes of illustration, and is not intended to be limiting. Embodiments may be implemented in further types of computer systems, as would be known to persons skilled in the relevant art(s).

As shown in FIG. 9, computer 900 includes a processor system 902, a system memory 904, and a bus 906 that couples various system components including system memory 904 to processor system 902. Bus 906 represents one or more of any of several types of bus structures, including a memory bus or memory controller, a peripheral bus, an accelerated graphics port, and a processor or local bus using any of a variety of bus architectures. System memory 904 includes read only memory (ROM) 908 and random access memory (RAM) 910. A basic input/output system 912 (BIOS) is stored in ROM 908.

Computer 900 also has one or more of the following drives: a hard disk drive 914 for reading from and writing to a hard disk, a magnetic disk drive 916 for reading from or writing to a removable magnetic disk 918, and an optical disk drive 920 for reading from or writing to a removable optical disk 922 such as a CD ROM, DVD ROM, or other optical media. Hard disk drive 914, magnetic disk drive 916, and optical disk drive 920 are connected to bus 906 by a hard disk drive interface 924, a magnetic disk drive interface 926, and an optical drive interface 928, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 930, one or more application programs 932, other program modules 934, and program data 936. Application programs 932 or program modules 934 may include, for example, computer program logic for implementing any one or more of (e.g., at least a portion of) the sampling and embedding AI logic 108, the sampling and embedding AI logic 408, the embedding model 412, the training logic 414, the trigger logic 416, the AI model 418, the sampling logic 420, the first log identification logic 422, the second log identification logic 424, the prompt generation logic 426, the report generation logic 428, the sampling and embedding AI logic 708, the embedding model 712, the training logic 714, the trigger logic 716, the AI model 718, the sampling logic 720, the first log identification logic 722, the second log identification logic 724, the prompt generation logic 726, the report generation logic 728, flowchart 200 (including any step of flowchart 200), flowchart 300 (including any step of flowchart 300), flowchart 500 (including any step of flowchart 500), and/or flowchart 600 (including any step of flowchart 600), as described herein.

A user may enter commands and information into the computer 900 through input devices such as keyboard 938 and pointing device 940. Other input devices (not shown) may include a microphone, joystick, game pad, satellite dish, scanner, touch screen, camera, accelerometer, gyroscope, or the like. These and other input devices are often connected to the processor system 902 through a serial port interface 942 that is coupled to bus 906, but may be connected by other interfaces, such as a parallel port, game port, or a universal serial bus (USB).

A display device 944 (e.g., a monitor) is also connected to bus 906 via an interface, such as a video adapter 946. In addition to display device 944, computer 900 may include other peripheral output devices (not shown) such as speakers and printers.

Computer 900 is connected to a network 948 (e.g., the Internet) through a network interface or adapter 950, a modem 952, or other means for establishing communications over the network. Modem 952, which may be internal or external, is connected to bus 906 via serial port interface 942.

As used herein, the terms "computer program medium" and "computer-readable storage medium" are used to generally refer to media (e.g., non-transitory media) such as the hard disk associated with hard disk drive 914, removable magnetic disk 918, removable optical disk 922, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 932 and other program modules 934) may be stored on the hard disk, magnetic disk, optical disk, ROM, or RAM. Such computer programs may also be received via network interface 950 or serial port interface 942. Such computer programs, when executed or loaded by an application, enable computer 900 to implement features of embodiments discussed herein. Accordingly, such computer programs represent controllers of the computer 900.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system comprising:
a processor system (902); and
a memory (904) that stores computer-executable instructions that are executable by the processor system to at least:
select (202) identified logs from a plurality of logs, which are associated with an entity, as a result of embeddings, which represent the identified logs, satisfying a representation criterion;
identify (204) potentially anomalous logs in at least a portion of the plurality of logs as a result of differences between embeddings of the potentially anomalous logs and a reference embedding that corresponds to at least the portion of the plurality of logs being greater than differences between embeddings of other logs in at least the portion of the plurality of logs and the reference embedding;
identify (206) statistically anomalous logs in the identified logs as a result of events indicated by embeddings of the statistically anomalous logs occurring more than an expected number of times during a period of time; and
trigger (208) an artificial intelligence, AI, model to determine whether the entity exhibits malicious behavior by providing an AI prompt, which comprises the identified logs, a description of the potentially anomalous logs, and a description of the statistically anomalous logs, as an input to the AI model, the AI prompt inquires whether the entity exhibits malicious behavior.

2. The system of claim 1, wherein the computer-executable instructions are executable by the processor system further to at least:
receive a response to the AI prompt from the AI model, the response indicating whether the entity exhibits malicious behavior; and
as a result of receiving the response to the AI prompt from the AI model, automatically trigger execution of an instruction that causes a statement to be provided via a user interface, the statement indicating whether the entity exhibits malicious behavior.

3. The system of claim 1 or claim 2, wherein the computer-executable instructions are executable by the processor system to select the identified logs from the plurality of logs by performing at least the following operations:
select a first identified log from the plurality of logs as a result of a first embedding that represents the first identified log corresponding to a center of a plurality of embeddings that represent the plurality of logs; and
select a second identified log from the plurality of logs as a result of a distance between a second embedding that represents the second identified log and the first embedding being greater than distances between others of the plurality of embeddings and the first embedding.

4. The system of any one of preceding claims, wherein the computer-executable instructions are executable by the processor system to select the identified logs from the plurality of logs further by performing at least the following operation:
select a third identified log from the plurality of logs as a result of a first distance or a second distance, whichever is less, being greater than third distances or fourth distances, whichever are less;
wherein the first distance is between a third embedding that represents the third identified log and the first embedding;
wherein the second distance is between the third embedding and the second embedding;
wherein the third distances are between others of the plurality of embeddings and the first embedding; and
wherein the fourth distances are between the others of the plurality of embeddings and the second embedding.

5. The system of any one of preceding claims, wherein the computer-executable instructions are executable by the processor system to at least:
select the first identified log from the plurality of logs as a result of the embedding that represents the first identified log corresponding to an average of the plurality of embeddings.

6. The system of any one of preceding claims, wherein the computer-executable instructions are executable by the processor system to select the identified logs from the plurality of logs by performing at least the following operations:
cluster subsets of the plurality of logs into respective clusters by analyzing a plurality of embeddings that represent the plurality of logs using a clustering algorithm as a result of the subsets corresponding to respective attributes; and
select the identified logs from the respective clusters.

7. The system of any one of preceding claims, wherein the computer-executable instructions are executable by the processor system to at least:
selecting the identified logs from the plurality of logs as a result of the identified logs pertaining to security of the entity.

8. A method implemented by a computing system, the method comprising:
selecting (502) a representative sample of a plurality of logs, which are associated with an entity, by comparing a plurality of embeddings that represent the plurality of logs, the representative sample comprising fewer than all of the plurality of logs;
identifying (504) a potentially anomalous log in at least a portion of the plurality of logs as a result of the potentially anomalous log corresponding to a first node of a tree that is closer than second nodes of the tree to a root node of the tree, the second nodes corresponding to other logs in at least the portion of the plurality of logs;
identifying (506) a statistically anomalous log in representative sample logs, which define the representative sample, as a result of the statistically anomalous log indicating an event that occurs a number of times that exceeds a number threshold or that occurs during a time period in which a probability of the event occurring is less than a probability threshold;
triggering (508) an artificial intelligence, AI, model to generate a report, which indicates whether the entity exhibits malicious behavior, by providing an AI prompt together with contextual information as inputs to the AI model, the AI prompt inquires whether the entity exhibits malicious behavior, the contextual information comprising the representative sample of the plurality of logs, a description of the potentially anomalous log, and a description of the statistically anomalous log, wherein the contextual information comprises context regarding the AI prompt.

9. The method of claim 8, further comprising:
as a result of receiving the report from the AI model, automatically triggering execution of an instruction that causes a security action to be performed with regard to the entity.

10. The method of claim 8 or claim 9, wherein selecting the representative sample of the plurality of logs comprises:
selecting a first log to be included in the representative sample as a result of a first embedding that represents the first log corresponding to a center of a plurality of embeddings that represent the plurality of logs; and
selecting a second log to be included in the representative sample as a result of a distance between a second embedding that represents the second log and the first embedding being greater than distances between others of the plurality of embeddings and the first embedding.

11. The method of any one of claims 8 to 10, wherein selecting the representative sample of the plurality of logs further comprises:
selecting a third log to be included in the representative sample as a result of a first distance or a second distance, whichever is less, being greater than third distances or fourth distances, whichever are less;
wherein the first distance is between a third embedding that represents the third log and the first embedding;
wherein the second distance is between the third embedding and the second embedding;
wherein the third distances are between others of the plurality of embeddings and the first embedding; and
wherein the fourth distances are between the others of the plurality of embeddings and the second embedding.

12. The method of any one of claims 8 to 11, wherein selecting the first log comprises:
selecting the first log to be included in the representative sample as a result of the embedding that represents the first log corresponding to a median of the plurality of embeddings.

13. The method of any one of claims 8 to 12, wherein selecting the representative sample of the plurality of logs comprises:
clustering subsets of the plurality of logs into respective clusters by analyzing the plurality of embeddings that represent the plurality of logs using a clustering algorithm as a result of the subsets corresponding to respective attributes; and
selecting logs from the respective clusters to define the representative sample.

14. The method of any one of claims 8 to 13, wherein the method further comprises:
as a result of the AI model generating the report, receiving an assessment of the report from a user, the assessment indicating whether the entity exhibits the malicious behavior from a perspective of the user; and
training the AI model using the assessment.

15. A computer program product (824, 918, 922) comprising a computer-readable storage medium having instructions recorded thereon for enabling a processor-based system to perform operations, the operations comprising:
selecting (502) a representative sample of a corpus of data, which is associated with an entity, by comparing a plurality of embeddings that represent the corpus of data, the representative sample comprising less than all of the corpus of data;
identifying (504) a potentially anomalous data point in at least a portion of the corpus of data as a result of the potentially anomalous data point corresponding to a first node of a tree that is closer than second nodes of the tree to a root node of the tree, the second nodes corresponding to other data points in at least the portion of the corpus of data;
identifying (506) a statistically anomalous data point in representative sample data points, which define the representative sample, as a result of the statistically anomalous data point indicating an event that occurs a number of times that exceeds a number threshold or that occurs during a time period in which a probability of the event occurring is less than a probability threshold;
triggering (508) an artificial intelligence, AI, model to generate a report, which indicates whether the entity exhibits malicious behavior, by providing an AI prompt together with contextual information as inputs to the AI model, the AI prompt inquires whether the entity exhibits malicious behavior, the contextual information comprising the representative sample of the corpus of data, a description of the potentially anomalous data point, and a description of the statistically anomalous data point, wherein the contextual information comprises context regarding the AI prompt.
